# EUROPEAN PATENT APPLICATION

(11) **EP 4 686 917 A1**
(43) Date of publication of application: **04.02.2026**
(21) Application number: 25191571.6
(22) Date of filing: 24.07.2025
(51) Int. Cl.: G01D 21/00

(54) **FUNCTIONALITY EXPANSION APPARATUS**

(30) Priority: 31.07.2024 JP 2024125022
(71) Applicant: Yokogawa Electric Corporation, Tokyo 180-8750 (JP)
(72) Inventor: KATO, Makoto, Musashino-shi, Tokyo, 180-8750, (JP)
(74) Representative: Winter, Brandl - Partnerschaft mbB

(57) **Abstract**

A functionality expansion apparatus (10) includes a first connection end portion (20a) that is connected to a digital sensor (100), a second connection end portion (20b) that is connected to a higher-level device (300) that performs communication with the digital sensor (100), a pass-through unit (31) that transfers a signal between the first connection end portion (20a) and the second connection end portion (20b), and an additional functionality unit (32) that provides an additional functionality for performing a predetermined process to one of the digital sensor (100), the higher-level device (300), and the signal.

## Description

### FIELD

The present invention relates to a functionality expansion apparatus.

### BACKGROUND

An analog sensor is used as a sensor device, such as an analyzer or a field device, that measures various kinds of physical quantities for an industrial process. The analog sensor is a detector that converts a measured physical quantity to an electrical signal and transmits the electrical signal to an external apparatus, and outputs the electrical signal to a converter that calculates a measurement value from the electrical signal and transfers the measurement value to a higher-level host. The converter is installed in a massive housing that is supposed to be a stationary device, includes various kinds of input output terminals for transferring an electrical signal that is received from the analog sensor to the higher-level host, and includes an operation function, such as a display screen, for making it possible to easily perform operation on site.

The analog sensor as described above is a measurement device that performs measurement on condition of being connected to a massive converter. In contrast, a digital sensor includes a detector and a digital communication unit that calculates a measurement value from an electrical signal and transfers a digital signal to a higher-level host. Therefore, the digital sensor is a portable measurement device that does not need a converter. The digital sensor as described above is configured such that the detector and a digital communication portion are separable or the detector that needs to be periodically calibrated or replaced due to deterioration over time is individually separable, which improves operability.
Patent Literature 1: U.S. Unexamined Patent Application Publication No. 2007/0110620
Patent Literature 2: U.S. Unexamined Patent Application Publication No. 2010/0026518
Patent Literature 3: U.S. Unexamined Patent Application Publication No. 2015/0242349

However, expandability of the converter of the analog sensor and portability of the digital sensor have trade-off relationships, and therefore, it is difficult to provide a digital sensor that is fully equipped with functionalities that are needed by the user.

The present invention has been conceived in view of the foregoing situations, and an object of the present invention is to provide a functionality expansion apparatus that is able to easily and simply provide a functionality that is needed in a digital sensor by a user.

### SUMMARY

According to an aspect of the embodiments, a functionality expansion apparatus includes a first connection end portion that is connected to a digital sensor, a second connection end portion that is connected to a higher-level device that performs communication with the digital sensor, a pass-through unit that transfers a signal between the first connection end portion and the second connection end portion, and an additional functionality unit that provides an additional functionality for performing a predetermined process to one of the digital sensor, the higher-level device, and the signal.

### BRIEF DESCRIPTION OF THE DRAWINGS

FIG. 1 is a diagram for explaining the way of use of a functionality expansion apparatus according to a first embodiment;
FIG. 2 is a diagram illustrating an overview of a system using an analog sensor;
FIG. 3 is a diagram illustrating an overview of a system using a digital sensor;
FIG. 4 is a diagram illustrating a configuration example of the functionality expansion apparatus according to the first embodiment;
FIG. 5 is a diagram illustrating a configuration example of a functionality expansion apparatus according to a second embodiment;
FIG. 6 is a diagram illustrating a configuration example of a functionality expansion apparatus according to a third embodiment;
FIG. 7 is a diagram illustrating a configuration example of a functionality expansion apparatus according to a fourth embodiment;
FIG. 8 is a diagram illustrating a configuration example of a functionality expansion apparatus according to a fifth embodiment;
FIG. 9 is a diagram illustrating a configuration example of a functionality expansion apparatus according to a sixth embodiment; and
FIG. 10 is a diagram illustrating a configuration example of a functionality expansion apparatus according to a seventh embodiment.

### DETAILED DESCRIPTION OF THE PREFERRED EMBODIMENTS

Embodiments of a functionality expansion apparatus disclosed in the present application will be described in detail below based on the drawings. Meanwhile, the present invention is not limited by the embodiments below. Further, the same components are denoted by the same reference symbols, and repeated explanation will be omitted appropriately. The embodiments may be combined appropriately as long as no contradiction is derived.

### First embodiment

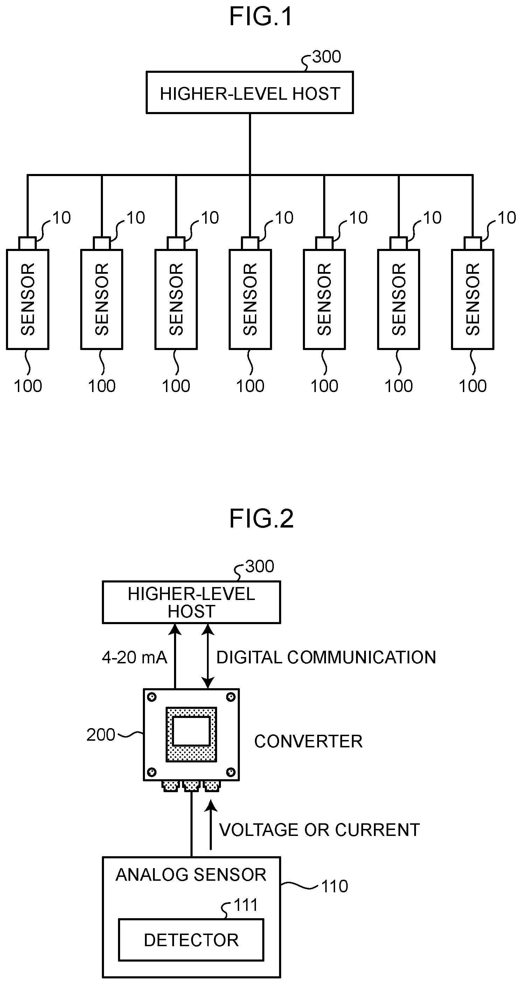

FIG. 1 is a diagram illustrating the way of use of the functionality expansion apparatus disclosed in the present application. As illustrated in FIG. 1, a functionality expansion apparatus 10 disclosed in the present application is connected to or attached to each of digital sensors 100 to expand a functionality of the digital sensor 100. Specifically, the functionality expansion apparatus 10 is a functionality expansion part (expansion attachment) that has a mechanism that can be directly or externally attached to or detached from the digital sensor 100 so as to maintain a compact size and light weight of the digital sensor 100 and selectively expand an additional functionality, such as operation input, that is implemented by a converter used in an analog sensor 110 on site.

Overviews and problems with a widely-used system using the analog sensor 110 and a system using the digital sensor 100 will be described below before explanation of the functionality expansion apparatus disclosed in the present application.

### System using analog sensor 110

FIG. 2 is a diagram illustrating an overview of the system using the analog sensor 110. As illustrated in FIG. 2, the system using the analog sensor 110 includes the analog sensor 110 that includes a detector 111 that measures various kinds of physical quantities, a converter 200, and a higher-level host 300, all of which are separated from one another and connected to one another via a cable or the like. In the system using the analog sensor, a physical quantity that is measured by the detector 111 is converted to an electrical signal of a current or voltage, the electrical signal is further converted, by the converter 200, to an analog signal, such as 4-20 mA, or digital communication, such as Modbus RTU, and the analog signal or the digital communication is transferred to the higher-level host 300, such as a control device.

The analog sensor 110 is a device that includes the detector 111 that converts a measured physical quantity to an electrical signal. A desired physical quantity that is calculated by the system using the analog sensor 110 is calculated by a calculation formula based on a measurement theoretical formula of a detector circuit and by a correction calculation based on a calibration factor for correcting an individual error of an electrical circuit, on the basis of the electrical signal of the analog sensor 110. However, the calculation, the correction calculation, storage of a correction factor, or the like is performed by the converter 200 rather than the analog sensor 110. Therefore, the analog sensor 110 is a device that performs measurement on condition of being connected to the converter 200.

The converter 200 is a device that calculates a measurement value from the electrical signal of the analog sensor 110 and transfers the measurement value to the higher-level host 300. The converter 200 is a stationary device that is housed in a massive housing. The converter 200 includes various kinds of input output terminals for receiving the electrical signal from the detector, calculating a measurement value, storing a numerical value, such as a coefficient, transmitting and receiving information to and from the higher-level host 300, or the like, a display screen for easily performing on-site operation, such as maintenance, an operation function, or the like.

The higher-level host 300 is a recorder that records a measurement value, a control device that controls the entire system based on the measurement value, a monitoring device that monitors the entire system using each of sensors based on the measurement value, or the like. Meanwhile, the measurement value of the higher-level host 300 is a measurement value that is transmitted from the converter 200 in the system using the analog sensor 110, and a measurement value that is transmitted from the digital sensor 100 in the system using the digital sensor 100.

### System using digital sensor 100

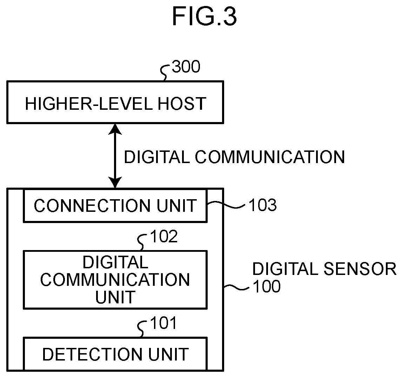

FIG. 3 is a diagram illustrating an overview of the system using the digital sensor 100. As illustrated in FIG. 3, the system using the digital sensor 100 includes the digital sensor 100 and the higher-level host 300, both of which are separated from each other and connected to each other via a cable or the like.

The digital sensor 100 converts a detected physical quantity to an electrical signal, calculates a measurement value from the electrical signal, converts the measurement value to a digital signal, and transmits the digital signal to the higher-level host 300. The digital sensor 100 includes a detection unit 101, a digital communication unit 102, and a connection unit 103. Meanwhile, the digital sensor 100 is, for example, a liquid analyzer, such as a pH sensor, a conductivity meter, or a dissolved oxygen meter (DO meter).

The detection unit 101 converts a measured physical quantity to an electrical signal of a current or voltage. The detection unit 101 corresponds to the detector 111 of the analog sensor in FIG. 2. The digital communication unit 102 calculates a measurement value from the electrical signal that is received from the detection unit 101. The digital communication unit 102 converts the calculated measurement value to a digital signal, and transmits the digital signal to the higher-level host 300 through the connection unit 103. The connection unit 103 connects the higher-level host 300 and the digital sensor 100 by various kinds of wired communication using cables or various kinds of wireless communication including near field communication.

The digital communication unit 102 is included in the digital sensor 100, and therefore, the digital sensor does not need the converter 200. With this configuration, it is advantageous in that an installation cost is reduced and space-saving is achieved.

### Problems

The system using the digital sensor does not need the converter 200 as illustrated in FIG. 3. With this configuration, the system using the digital sensor has advantages in that an installation cost for a converter is reduced, space-saving is achieved, maintenance operation is reduced due to a reduced size and reduced weight, and the like. In contrast, an additional functionality, such as operation input, signal conversion for various kinds of communication, or a display screen, which are implemented by the conventional converter 200 on site are omitted, so that a user who needs the additional functionality feels inconvenient. In other words, expandability of the converter 200 and portability of the system using the digital sensor have trade-off relationships, and therefore, it is difficult to provide a functionality that the user needs in the digital sensor.

When maintenance operation is performed on site by the system using the analog sensor, the user is able to easily perform operation, such as holding of output, by performing operation on a display screen of the converter 200. In contrast, when maintenance operation is performed on site by the system using the digital sensor, the user needs to perform operation, such as detachment from an instrumentation loop, in the higher-level host 300 because the digital sensor 100 does not include an operation element or the like. Further, when the user performs trouble shooting or the like and wants to temporarily view data that is not usually transmitted to the higher-level host, it is needed to reconfigure wiring including the digital sensor 100, which increases an operation difficulty. Therefore, the user is not able to easily perform the operation.

Furthermore, the digital sensor 100 that is included in the system using the digital sensor is generally driven with low power consumption that is substantially equal to a two-wire meter. Therefore, in some cases, a power supply means is needed to allow the user to temporarily perform communication and operation on the digital sensor 100. To cope with this, the user needs to connect, in advance, a power supply device, as the power supply means, to each of the digital sensors 100.

Moreover, in some cases, the user wants to use a different protocol from an existing protocol after initial introduction of the system using the analog sensor is completed. In this case, it is possible to address the situation by operation, functionality expansion, or the like on the converter 200 that is compatible with the different protocol. In contrast, in some cases, the user wants to use a different protocol from a communication protocol that is output by the digital sensor 100 after initial introduction of the system using the digital sensor is completed. In this case, the user needs to purchase a compatible digital sensor. When the compatible digital sensor or a compatible analog sensor is not present, the user needs to introduce an external signal converter or the like. In particular, when the user wants to use a new communication protocol in addition to the existing communication protocol, the user needs to add equipment and change wiring, such as branching of existing wiring, so that an engineering cost increases and becomes expensive.

Furthermore, if all of additional functionalities that are included in the converter 200 of the system using the analog sensor are introduced to the housing of the digital sensor 100, the advantage of the reduced size and the reduced weight decreases and a price is increased, which is disadvantageous for a user who does not need the additional functionalities.

As described above, the expandability of the converter of the analog sensor and the portability of the digital sensor have trade-off relationships, and therefore, it is difficult to provide a digital sensor that is fully equipped with functionalities that are needed by the user.

### Explanation of functionality expansion apparatus

In view of the above, the functionality expansion apparatus 10 disclosed in the present application includes a connection unit 20a that is connected to the digital sensor 100, a connection unit 20b that is connected to the higher-level host 300 that performs communication with the digital sensor 100, a pass-through unit that transfers a signal between the connection unit 20a and the connection unit 20b, and an additional functionality unit 32 that provides an additional functionality for performing a predetermined process on the digital sensor 100, the higher-level host 300, or a signal. Meanwhile, the connection unit 20a is one example of a first connection end portion according to the present application, and the connection unit 20b is one example of a second connection unit according to the present application. Further, the higher-level host is one example of a higher-level device according to the present application.

Specifically, the functionality expansion apparatus 10 maintains transfer of a signal, which is received from the digital sensor 100, between the connection unit 20a and the connection unit 20b, and performs an arbitrary additional process by the additional functionality unit 32. Therefore, the functionality expansion apparatus 10 is able to easily provide, as an additional functionality, a predetermined functionality that is needed by the user among the functionalities that are implemented by the converter 200.

As described above, with the functionality expansion apparatus 10, it is possible to realize a system using the digital sensor 100 that has a necessary and sufficient functionality for the user while maintaining advantage of the reduced size and the reduced weight of the digital sensor 100 and a cost balance.

Furthermore, the functionality expansion apparatus 10 is an apparatus that is easily attachable and detachable to and from the digital sensor 100 and the higher-level host 300, and is an expansion attachment that is directly or externally attached to or detached from the digital sensor 100. Specifically, the functionality expansion apparatus 10 is attached to the digital sensor 100 and connected to the higher-level host 300 by a cable, radio, or the like. The functionality expansion apparatus 10 is configured to implement an arbitrary additional functionality while transferring (hereinafter, referred to as pass-through) a signal that is output by the digital sensor 100 to a higher-level device. Moreover, it is possible to connect the plurality of functionality expansion apparatuses 10 in a multi-stage manner, so that it is possible to flexibly add or delete a functionality while maintaining communication with the higher-level host 300.

### Functional configuration

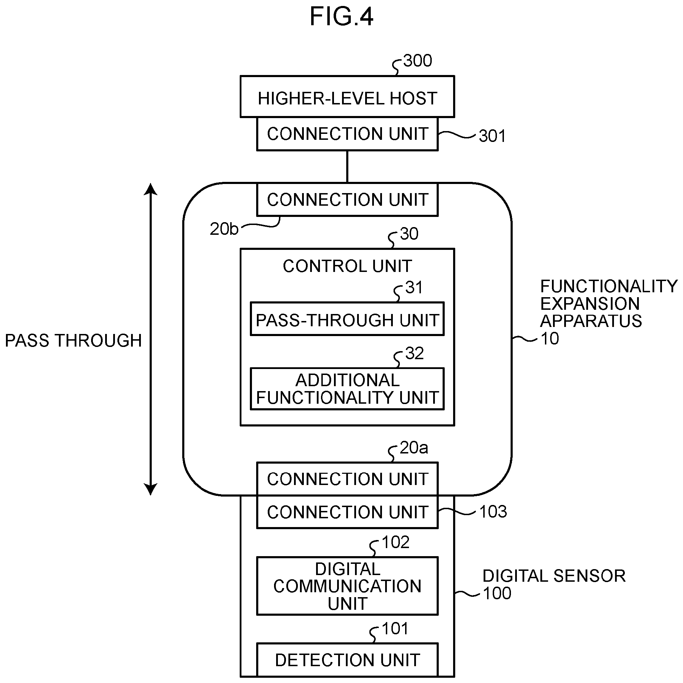

FIG. 4 is a diagram illustrating a configuration of the functionality expansion apparatus 10 of the first embodiment. The functional configuration of the functionality expansion apparatus 10 as described above will be described. As illustrated in FIG. 4, the functionality expansion apparatus 10 includes the connection unit 20a, the connection unit 20b, and a control unit 30.

The connection unit 20a is connected to the connection unit 103 of the digital sensor 100. The connection unit 20a is, for example, a 4-20 mA input output terminal or the like that has a male and female structure of a pin connector and has a digital communication function, such as Highway Addressable Remote Transducer (HART) communication. The connection unit 20a and the connection unit 103 may be directly coupled with each other or may be connected to each other in a wired or wireless manner.

The connection unit 20b is connected to a connection unit 301 of the higher-level host 300. The connection unit 20b is, for example, a 4-20 mA input output terminal or the like that has a male and female structure of a pin connector and has a digital communication function, such as HART communication. The connection unit 20b and the connection unit 301 may be directly coupled with each other or may be connected to each other in a wired or wireless manner.

Furthermore, it is possible to connect the plurality of functionality expansion apparatuses 10 in a multi-stage manner. Therefore, the connection unit 20a and the connection unit 20b are connectable to each other. Moreover, the connection unit 20a and the connection unit 20b are configured in an attachable and detachable manner. Meanwhile, when the connection unit 20a and the connection unit 20b do not compatible with the connection unit 103 or the connection unit 301, it may be possible to use a conversion adapter for conversion to a compatible terminal.

The control unit 30 controls the entire functionality expansion apparatus 10. The control unit 30 includes a pass-through unit 31 and the additional functionality unit 32. Here, the control unit 30 may be implemented by, for example, an electronic circuit, such as a Central Processing Unit (CPU) or a Micro Processing Unit (MPU), or an integrated circuit, such as an Application Specific Integrated Circuit (ASIC) or a Field Programmable Gate Array (FPGA).

The pass-through unit 31 transmits a received signal from one of the connection unit 20a and the connection unit 20b to the other one of the connection unit 20a and the connection unit 20b. For example, the pass-through unit 31 transfers a signal that the connection unit 20a has received from the digital sensor 100 to the connection unit 20b, and transfers a signal that the connection unit 20b has received from the higher-level host 300 to the connection unit 20a. Meanwhile, the pass-through unit 31 may transfer the received signal as it is or may add modification, such as temporary fixation of a value of the received signal.

Furthermore, the pass-through unit 31 may add arbitrary data to the received signal. For example, the pass-through unit 31 outputs self-diagnosis information and an identifier of the functionality expansion apparatus 10 to a communication data address area that is determined in advance, so that the higher-level host 300 is able to recognize a state of the digital sensor 100 including a series of the functionality expansion apparatuses 10.

The additional functionality unit 32 implements an expanded functionality for the digital sensor 100. It is possible to set, in the additional functionality unit 32, various kinds of functionalities or the like that are implemented by the conventional converter 200, and it is possible to set only a functionality that is needed by the user. The additional functionality unit 32 is able to add one or more additional functionalities without disconnecting communication that is performed by the pass-through unit 31 between the digital sensor 100 and the higher-level host 300. Examples of the functionality that is implemented by the additional functionality unit 32 will be described below.

For example, an operation input functionality is set in the additional functionality unit 32. The operation input functionality corresponds to an operation input functionality that is implemented by the conventional converter 200 on site, and is a functionality to perform operation on the digital sensor 100. Examples of the operation input functionality include a hardware hold switch (HOLD switch). A functionality of the HOLD switch is a functionality to, when the measurement value of the digital sensor 100 indicates an abnormal value during maintenance operation on site, prevent transfer of the measurement value to the higher-level host 300.

Specifically, while the HOLD switch is set to ON with respect to the pass-through unit 31, the additional functionality unit 32 gives an instruction to perform a numerical value fixation process of fixing a value that is obtained immediately before the HOLD switch is pressed, with respect to a communication content of the signal from the digital sensor 100 to the higher-level host 300. By adding the functionality, for example, the user is able to exclude the higher-level host 300 from a control loop by only pressing the HOLD switch when performing maintenance or the like of the digital sensor 100 on site. With this configuration, the user need not perform operation of exclusion from an instrumentation loop on the higher-level host 300 side, so that it is possible to largely simplify operation.

For example, a near field wireless communication functionality is set in the additional functionality unit 32. The near field wireless communication functionality is a functionality to perform a signal transfer process of transferring, by near field wireless communication, a content, such as a value that is transferred by the pass-through unit 31 or other values that are received by the connection unit 20a in the digital sensor 100, to a connected apparatus. Meanwhile, the near field wireless communication functionality enables to receive various kinds of data or the like from the connected apparatus.

Specifically, the additional functionality unit 32 acquires a content, such as a value that is transferred from the pass-through unit 31 to the higher-level host 300 or other values that are received by the connection unit 20a in the digital sensor 100, and transfers the acquired content to near field communication, such as Bluetooth (registered trademark). By adding this functionality, for example, the user is able to temporarily check the state of the digital sensor 100 by connecting to the near field wireless communication via a terminal, such as a smartphone, when performing trouble shooting or the like. With this configuration, when the user wants to temporarily view data that is not usually transmitted to the higher-level host, the user need not perform certain operation, such as introduction of a new device or reconfiguration of wiring including the digital sensor 100, so that it is possible to improve efficiency of operation.

For example, a display functionality is set in the additional functionality unit 32. The display functionality is a functionality to perform a display process of displaying a content, such as a value that is transferred by the pass-through unit 31 or other values that are received by the connection unit 20a in the digital sensor 100.

Specifically, the additional functionality unit 32 acquires a value that is transferred from the pass-through unit 31 to the higher-level host 300 or other values that are received by the connection unit 20a in the digital sensor 100, and displays the acquired content. By adding this functionality, for example, the user does not need a terminal, such as a smartphone, and is able to easily check the state of the digital sensor 100 by only connecting the functionality expansion apparatus 10 to the digital sensor 100 when performing maintenance or the like of the digital sensor 100 on site. With this configuration, the user need not perform certain operation, such as introduction of a new device or reconfiguration of wiring including the digital sensor 100, and does not need a terminal, such as a smartphone, so that it is possible to further simplify operation.

For example, a power supply functionality is set in the additional functionality unit 32. The power supply functionality is a functionality to perform a power supply process of supplying power to the digital sensor 100 or the like.

Specifically, the additional functionality unit 32 supplies power to the digital sensor 100 that is driven with low power consumption. By adding this functionality, when the user needs power to perform temporary communication or operation, it is possible to supply power by only connecting the functionality expansion apparatus 10 to the digital sensor 100. With this configuration, the user need not perform, in advance, wiring of a power supply device, as a power supply means, to the digital sensor 100 or the like, so that it is possible to improve efficiency of operation.

### Effect

As described above, the user is able to add various kinds of functionalities to the digital sensor 100 by connecting the functionality expansion apparatus 10 to the digital sensor 100. With this configuration, the user need not perform complicated operation or the like, so that it is possible to largely improve efficiency of operation, such as maintenance and inspection.

The functionality expansion apparatus 10 is able to externally attach a functionality that is needed by the user among the functionalities that are implemented by the conventional converter 200 on site. With this configuration, it is possible to add a functionality that is needed by the user while maintaining the advantage of the reduced size and the reduced weight of the digital sensor 100, space-saving, or the like. Further, it is possible to add only a functionality that is needed by the user, so that it is possible to achieve a necessary and sufficient cost balance.

### Second embodiment

In the first embodiment, the example has been described in which a single additional functionality is set in the functionality expansion apparatus 10, but embodiments are not limited to this example, and it may be possible to set a plurality of additional functionalities in the functionality expansion apparatus 10. Therefore, in a second embodiment, an example will be described in which a plurality of additional functionalities are set in the functionality expansion apparatus 10.

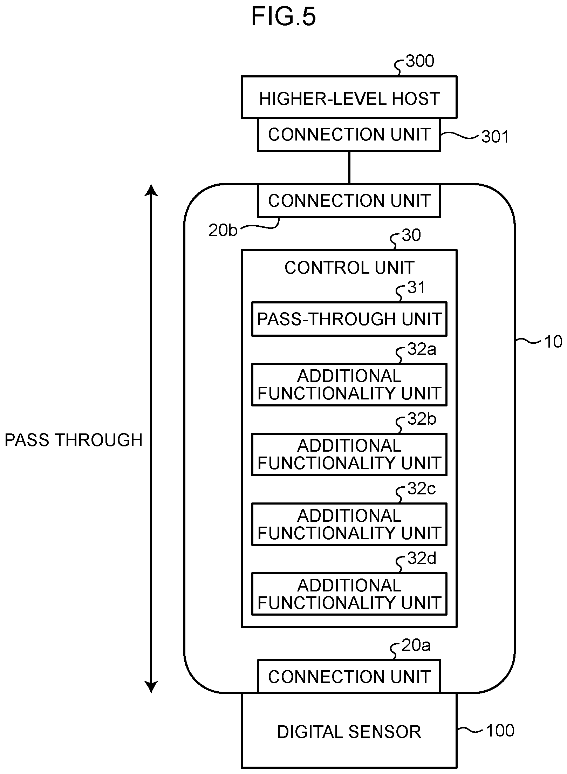

FIG. 5 is a diagram illustrating a configuration of the functionality expansion apparatus 10 according to the second embodiment. As illustrated in FIG. 5, the functionality expansion apparatus 10 according to the second embodiment includes the plurality of additional functionality units 32, unlike the functionality expansion apparatus 10 according to the first embodiment. The functionality expansion apparatus 10 according to the second embodiment is an apparatus that extends functionalities of the digital sensor 100, and includes the same components as those of the functionality expansion apparatus 10 according to the first embodiment. In the following, processing contents of the functionality expansion apparatus 10 according to the second embodiment, which are different from the functionality expansion apparatus 10 according to the first embodiment, will be described. Meanwhile, explanation of the same components and the same processes as those of the first embodiment will be omitted.

The functionality expansion apparatus 10 according to the second embodiment includes an additional functionality unit 32a to an additional functionality unit 32d in the control unit 30, and an additional functionality that is selected by the user is set in each of the additional functionality units. With this configuration, it is possible to obtain the functionality expansion apparatus 10 in which a plurality of functionalities that are needed by the user are set.

For example, an operation functionality is set in the additional functionality unit 32a, a near field communication functionality is set in an additional functionality unit 32b, a HOLD switch is set in an additional functionality unit 32c, and a power supply functionality is set in the additional functionality unit 32d. Accordingly, at the time of maintenance and inspection, the user sets the HOLD switch to ON and fixes a value that is to be transmitted to the higher-level host. At the same time or in parallel, the user is able to check, by a smartphone, a state of the digital sensor 100 by the near field communication functionality, operate the digital sensor 100 by the operation input functionality, and supply power that is needed in accordance with the operation to the digital sensor 100.

### Effect

In the second embodiment, it is possible to collectively set a plurality of functionalities that are selected by the user in the functionality expansion apparatus 10. Therefore, it is possible to perform maintenance and inspection or the like with only the functionality expansion apparatus 10 in which only right amounts of needed functionalities are set for each plant. Therefore, it is not needed to prepare the plurality of functionality expansion apparatuses 10, so that it is possible to contribute to cost reduction.

### Third embodiment

In the second embodiment, the example has been described in which a plurality of an additional functionalities are set in the functionality expansion apparatus 10, but embodiments are not limited to this example, and it may be possible to connect the functionality expansion apparatuses 10 of the first embodiment in a multi-stage manner. Therefore, in a third embodiment, a multi-stage structure of the functionality expansion apparatuses 10 will be described.

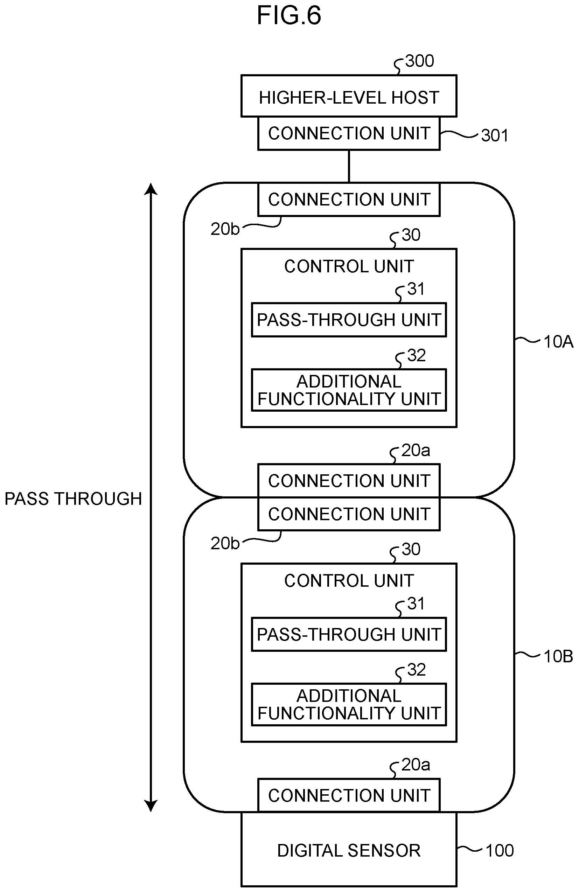

FIG. 6 is a diagram illustrating a configuration of the functionality expansion apparatus 10 according to the third embodiment. The functionality expansion apparatus 10 according to the third embodiment will be described. As illustrated in FIG. 6, a functionality expansion apparatus 10A and a functionality expansion apparatus 10B according to the third embodiment have the same configurations, and each of the functionality expansion apparatus 10A and the functionality expansion apparatus 10B includes "the connection unit 20a, the connection unit 20b, and the control unit 30" that are described in the first embodiment. As the way of use of the functionality expansion apparatus 10 according to the third embodiment, similarly to the first embodiment, the higher-level host 300, the functionality expansion apparatus 10A, the functionality expansion apparatus 10B, and the digital sensor 100 are connected to each other. Meanwhile, explanation of the same configuration and the same process as those of the first embodiment will be omitted.

For example, a HOLD switch functionality is set in the additional functionality unit 32 of the functionality expansion apparatus 10A, and a near field communication functionality is set in the additional functionality unit 32 of the functionality expansion apparatus 10B. The connection unit 20a of the functionality expansion apparatus 10A and the connection unit 20b of the functionality expansion apparatus 10B as described above are removably connected to each other by being directly connected to each other or by being connected to each other in a wired manner using a cable or the like or in a wireless manner. Accordingly, at the time of maintenance and inspection or the like, the user sets the HOLD switch of the functionality expansion apparatus 10A to ON and fixes a value that is to be transmitted to the higher-level host. At the same time, the user is able to check, by a smartphone, a state of the digital sensor 100 by the near field communication functionality of the functionality expansion apparatus 10B.

### Effect

In the third embodiment, various kinds of functionalities are set in the plurality of functionality expansion apparatuses 10. The user is able to easily add a functionality that is needed for maintenance and inspection to the digital sensor 100 by flexibly combining and connecting the functionality expansion apparatuses 10 on site. Further, in the third embodiment, the plurality of functionality expansion apparatuses 10 are needed, but the functionality expansion apparatuses 10 may be separated from each other. For example, when the specific additional functionality unit 32 is no longer needed in the certain digital sensor 100, it is possible to separate the functionality expansion apparatus 10 in which the subject additional functionality unit 32 is set and use the separated functionality expansion apparatus 10 for the different digital sensor 100. Therefore, the functionality expansion apparatus 10 is able to flexibly cope with a change or the like of the functional configuration of the digital sensor 100.

Furthermore, the size and the weight of the functionality expansion apparatus 10 are reduced, so that it is possible to carry the plurality of functionality expansion apparatuses 10 and easily connect the functionality expansion apparatuses 10 with one another. The user is able to easily expand a functionality of the digital sensor 100.

### Fourth embodiment

In the first embodiment to the third embodiment, the examples have been described in which the functionality expansion apparatus 10 provides an arbitrary additional functionality, but embodiments are not limited to this example, and the functionality expansion apparatus 10 is able to output a certain instruction to the digital sensor 100. Therefore, in a fourth embodiment, the functionality expansion apparatus 10 that outputs an instruction to the digital sensor 100 will be described.

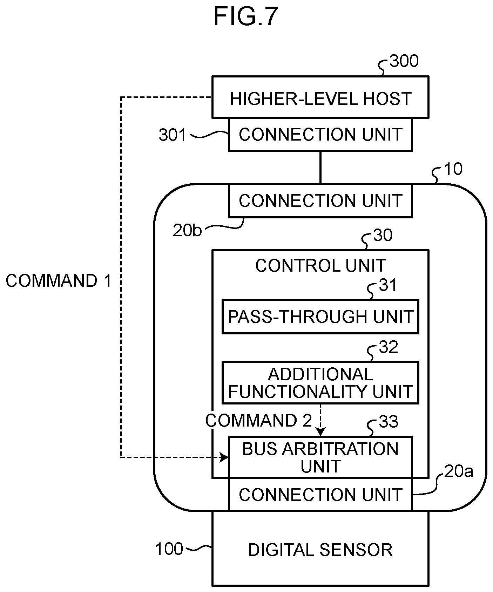

FIG. 7 is a diagram illustrating a configuration of the functionality expansion apparatus 10 according to the fourth embodiment. The functionality expansion apparatus 10 according to the fourth embodiment is an apparatus that expands a functionality of the digital sensor 100 and performs adjustment to prevent mixture of two or more transmission signals for the digital sensor 100.

As illustrated in FIG. 7, the functionality expansion apparatus 10 according to the fourth embodiment includes the connection unit 20a, the connection unit 20b, and the control unit 30, and the control unit 30 includes a bus arbitration unit 33 in addition to the pass-through unit 31 and the additional functionality unit 32. Meanwhile, explanation of "the control unit 30, the pass-through unit 31, and the additional functionality unit 32" that are the same components as those of the functionality expansion apparatus 10 according to the first embodiment will be omitted. In the following, the bus arbitration unit 33 that performs a different process from the functionality expansion apparatus 10 according to the first embodiment will be described.

The bus arbitration unit 33 adjusts an order and a timing of a transmission signal with respect to the digital sensor 100. For example, the bus arbitration unit 33 is needed when the functionality expansion apparatus 10 issues a command to the digital sensor 100. As illustrated in FIG. 7, the bus arbitration unit 33 transmits, to the digital sensor 100, a command 1 from the higher-level host 300 (or the different functionality expansion apparatus 10 that is connected to a higher level) or the like and a command 2 from the functionality expansion apparatus 10 based on an arbitrary priority order and a timing that are set in advance.

For example, a time interval of 500 milliseconds (ms) in which priority is given to a command from the higher-level host 300 is set in the bus arbitration unit 33. The additional functionality unit 32 of the functionality expansion apparatus 10 transmits the command 2 to the bus arbitration unit 33. In the cases of (1) and (2) below, the bus arbitration unit 33 waits for transmission of the command 2 to the digital sensor 100. Meanwhile, in the case other than (1) and (2), the bus arbitration unit 33 transmits the command 2 to the digital sensor 100 via the connection unit 20a.

The case (1) is a case in which the bus arbitration unit 33 has already received the command 1 from the higher-level host 300 or the like. In this case, the bus arbitration unit 33 waits for transmission of the command 2 until transmission of a reply to the command 1 being received to the higher-level host 300 or the like is completed.

The case (2) is a case in which the time interval of 500 ms has already elapsed since transmission of a reply to the last command 1 to the higher-level host 300 or the like. In this case, when the next command 1 is present, the bus arbitration unit 33 waits for transmission of the command 2 until transmission of the next command 1 to the digital sensor 100 is completed. Further, when the next command 1 is not present, the bus arbitration unit 33 waits for transmission of the command 2 until a silent section of 500 ms of the command 1 elapses.

When the wait state in the case (1) or the case (2) is released, the bus arbitration unit 33 transmits the command 2 to the digital sensor 100 via the connection unit 20b.

Meanwhile, the command 1 is, for example, a command for periodically acquiring a main measurement value and a state of the digital sensor 100 from the higher-level host 300 (a command for checking the main measurement value and the state of the digital sensor), and the command 2 is, for example, a command (calibration) for calibrating the digital sensor 100 at the time of maintenance and inspection or the like and checking the state of the digital sensor 100 from the user. Meanwhile, each of the commands are described by way of example, and embodiments are not limited to this example.

Meanwhile, when it is possible to implement the functionality that is set in the additional functionality unit 32, by communication data that is transmitted from an apparatus other than the functionality expansion apparatus 10, the bus arbitration unit 33 is not needed.

The functionality expansion apparatus 10 is connected based on the assumption that the higher-level host 300 periodically issues the command 1 for checking the state of the digital sensor 100. In this case, the functionality expansion apparatus 10 acquires data when communication data (a measurement value or the like) of a reply that is for the command 1 and that is given by the digital sensor 100 is passed through. For example, when a display functionality is set in the additional functionality unit 32 of the functionality expansion apparatus 10, the additional functionality unit 32 acquires data that is passed through, and displays the data on a display screen.

Furthermore, the digital sensor 100 has a functionality to spontaneously and periodically transmit the state of the digital sensor 100 to the higher-level host. In this case, the functionality expansion apparatus 10 that is attached to the digital sensor 100 acquires communication data that is passed through to the higher-level host 300 from the digital sensor 100.

### Effect

In the fourth embodiment, when the user uses a different communication protocol from a communication protocol for performing output to the digital sensor 100 after the digital sensor 100 is installed, the functionality expansion apparatus 10 that includes the bus arbitration unit 33 that is compliant with the different communication protocol is additionally attached. With this configuration, the user is able to extend a loop configuration while maintaining the existing loop configuration by additionally attaching the new functionality expansion apparatus 10. The user need not introduce a compliant digital sensor, an external signal converter, or the like, so that it is possible to largely reduce a cost. Further, the user need not perform complicated operation, such as branching of existing wire, so that it is possible to largely improve operation efficiency.

### Fifth embodiment

In the first embodiment to the fourth embodiment, the example has been described in which the functionality expansion apparatuses 10 are connected in series (in a vertical direction), but embodiments are not limited to this example, the functionality expansion apparatuses 10 may be connected in parallel (in a lateral direction). Therefore, in a fifth embodiment, the functionality expansion apparatuses 10 that are connected in parallel will be described.

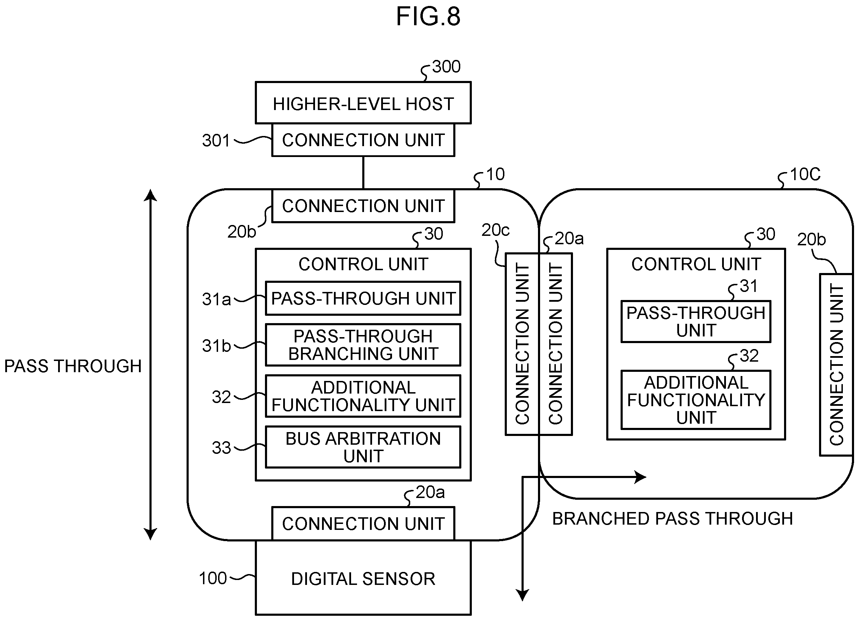

FIG. 8 is a diagram illustrating a configuration of the functionality expansion apparatus 10 according to the fifth embodiment. The functionality expansion apparatus 10 according to the fifth embodiment is an apparatus that is connectable to a different functionality expansion apparatus 10C (or may be a different higher-level host) via a connection unit 20c, in addition to the connection unit 20b. Therefore, the functionality expansion apparatus 10 according to the fifth embodiment expands a functionality of the digital sensor 100 and executes pass-through for the connection unit 20a and the connection unit 20b and branched pass-through for the connection unit 20a and the connection unit 20c. Meanwhile, the connection unit 20c is one example of a third connection unit of the invention of the present application.

As illustrated in FIG. 8, the functionality expansion apparatus 10 according to the fifth embodiment includes the connection unit 20c in addition to the connection unit 20a, the connection unit 20b, and the control unit 30. Further, the control unit 30 includes a pass-through branching unit 31b in addition to a pass-through unit 31a, the additional functionality unit 32, and the bus arbitration unit 33. Furthermore, the functionality expansion apparatus 10C includes the connection unit 20a, the connection unit 20b, and the control unit 30, and the control unit 30 includes the pass-through unit 31 and the additional functionality unit 32.

Here, explanation of "the control unit 30, the pass-through unit 31, and the additional functionality unit 32" of each of the functionality expansion apparatuses, which are the same components as those of the functionality expansion apparatus 10 according to the first embodiment, will be omitted. In the following, the pass-through branching unit 31b and the bus arbitration unit 33 that are included in the functionality expansion apparatus 10 and that perform different processes from the functionality expansion apparatus 10 according to the first embodiment will be described.

Meanwhile, the connection unit 20c has the same configuration as the connection unit 20b, and is configured so as to be connectable to the functionality expansion apparatus 10 or the higher-level host 300. Meanwhile, the connection unit 20c may constantly be connected to the functionality expansion apparatus 10 or the like, or may temporarily be connected to the functionality expansion apparatus 10 or the like as needed.

The pass-through branching unit 31b branches pass-through that is being executed. The pass-through branching unit 31b branches pass-through that is being executed by the pass-through unit 31a between the connection unit 20a and the connection unit 20b, and executes pass-through even between the connection unit 20a and the connection unit 20c. Meanwhile, it may be possible to set the functionality of the pass-through branching unit 31b in the additional functionality unit 32.

The bus arbitration unit 33 adjusts pass-through based on an arbitrary priority order and timing that are set in advance. The bus arbitration unit 33 controls the pass-through unit 31a and the pass-through branching unit 31b so as to prevent mixture of the pass-through and the branched pass-through, in addition to implementing the functions of the fourth embodiment.

For example, a HOLD switch functionality is set in the additional functionality unit 32 of the functionality expansion apparatus 10, and a display functionality is set in the additional functionality unit 32 of the functionality expansion apparatus 10C. The user sets the HOLD switch of the functionality expansion apparatus 10 to ON at the time of maintenance and inspection. With this configuration, a value that is transmitted from the digital sensor 100 to the higher-level host 300 is fixed. Thereafter, the user connects the functionality expansion apparatus 10C to the connection unit 20c. Accordingly, a value of the digital sensor 100 that is not fixed is displayed, by the branched pass-through, on a display unit of the functionality expansion apparatus 10C, so that the user is able to check the situation of the digital sensor 100.

### Effect

In the fifth embodiment, even in a different higher-level host (or the different functionality expansion apparatus 10C) in addition to the higher-level host 300, it is possible to transfer data using an arbitrary communication protocol by the branched pass-through. The user is able to temporarily acquire data that is not normally transmitted by the digital sensor 100, only by connecting the functionality expansion apparatus 10C to the connection unit 20c of the different functionality expansion apparatus 10 as needed. The user need not perform operation of disconnecting or reconnecting wire of the digital sensor 100, so that it is possible to largely improve usability.

### Sixth embodiment

In the first embodiment to the fifth embodiment, the examples have been described in which the functionality expansion apparatus 10 provides an arbitrary additional functionality to the digital sensor 100, but embodiments are not limited to this example, and it is possible to assist and expand the functionality of the functionality expansion apparatus 10 by connecting the functionality expansion apparatus 10 and a functionality expansion apparatus 10D. Therefore, in a sixth embodiment, the functionality expansion apparatus 10 and the functionality expansion apparatus 10D that assists or expands a functionality of the different functionality expansion apparatus 10 will be described.

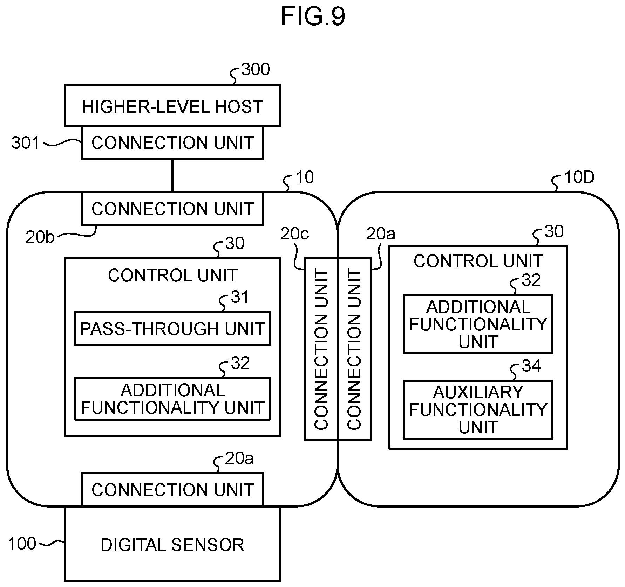

FIG. 9 is a diagram illustrating a configuration of the functionality expansion apparatus 10 and the functionality expansion apparatus 10D according to the sixth embodiment. The functionality expansion apparatus 10 according to the sixth embodiment is an apparatus that is connectable to the different functionality expansion apparatus 10D via the connection unit 20c, in addition to the connection unit 20b. The functionality expansion apparatus 10D according to the sixth embodiment is an apparatus that assists or expands a functionality of the different functionality expansion apparatus 10.

As illustrated in FIG. 9, the functionality expansion apparatus 10 according to the sixth embodiment includes the connection unit 20c, in addition to the connection unit 20a, the connection unit 20b, and the control unit 30. The control unit 30 includes the pass-through unit 31 and the additional functionality unit 32.

The functionality expansion apparatus 10D according to the sixth embodiment includes the connection unit 20a and the control unit 30, and the control unit 30 includes an auxiliary functionality unit 34 in addition to the additional functionality unit 32.

Meanwhile, explanation of "the control unit 30, the pass-through unit 31, and the additional functionality unit 32" that are the same components as those of the functionality expansion apparatus 10 according to the first embodiment will be omitted. **In** the following, the auxiliary functionality unit 34 of the functionality expansion apparatus 10D that performs a different process from the functionality expansion apparatus 10 according to the first embodiment will be omitted.

Meanwhile, the additional functionality unit 32 of the functionality expansion apparatus 10D has the same functionalities as those of the additional functionality unit 32 of the functionality expansion apparatus 10 according to the first embodiment, but adds a functionality to the functionality expansion apparatus 10 rather than adding a functionality to the digital sensor 100. Further, the functionality expansion apparatus 10 of the sixth embodiment does not include the bus arbitration unit 33 and the pass-through branching unit 31b, and therefore does not execute branched pass-through with respect to the connection unit 20c. The functionality expansion apparatus 10D includes only the connection unit 20a, and therefore does not execute pass-through.

For example, in the auxiliary functionality unit 34, it is possible to set a display functionality, a data recording functionality, a power supply functionality, or the like as a functionality to assist the functionality expansion apparatus 10.

For example, the user connects the functionality expansion apparatus 10D in which the display functionality is set in the auxiliary functionality unit 34 to the connection unit 20c of the functionality expansion apparatus 10. With this configuration, the user is able to check an internal state of the functionality expansion apparatus 10 and diagnose the functionality expansion apparatus 10.

### Effect

**In** the sixth embodiment, by connecting the functionality expansion apparatus 10D to the functionality expansion apparatus 10, it is possible to assist the functionality expansion apparatus 10 to implement a display function, data recording, power supply, or the like. The user is able to use the functionality expansion apparatus 10 in common by temporarily connecting and using the functionality expansion apparatus 10D, so that introduction of a new device, wiring, or the like is not needed and it is possible to improve cost effectiveness.

### Seventh embodiment

In the first embodiment to the sixth embodiment, the examples have been described in which the different functionality expansion apparatus 10, the digital sensor 100, or the higher-level host 300 is connected to the functionality expansion apparatus 10, but embodiments are not limited to this example, and it may be possible to connect an external apparatus 400 to the functionality expansion apparatus 10. Therefore, in a seventh embodiment, the functionality expansion apparatus 10 that is connected to the external apparatus 400 will be described.

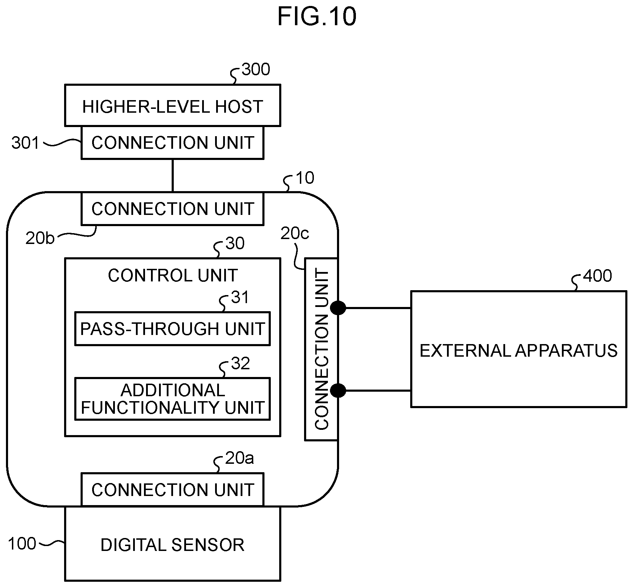

FIG. 10 is a diagram illustrating a configuration of the functionality expansion apparatus 10 of the seventh embodiment. The functionality expansion apparatus 10 according to the seventh embodiment is an apparatus that is connectable to the external apparatus 400 via the connection unit 20c. The external apparatus 400 is a power supply device, a 4-20 mA input device, or the like.

As illustrated in FIG. 10, the functionality expansion apparatus 10 according to the seventh embodiment includes the connection unit 20c in addition to the connection unit 20a, the connection unit 20b, and the control unit 30. Meanwhile, explanation of "the connection unit 20a, the connection unit 20b, and the control unit 30" that are the same components as those of the functionality expansion apparatus 10 according to the first embodiment will be omitted. In the following, the connection unit 20c that is different from the functionality expansion apparatus 10 according to the first embodiment will be described. Meanwhile, the functionality expansion apparatus 10 of the seventh embodiment does not include the bus arbitration unit 33 and the pass-through branching unit 31b, and therefore, does not execute branched pass-through with respect to the connection unit 20c.

The connection unit 20c is connected to an external apparatus. For example, it may be possible to adopt a coupling terminal, a 4-20 mA output terminal, a digital contact input-output terminal, a wired power input terminal, or the like.

For example, the user connects the functionality expansion apparatus 10 in which a signal conversion functionality is set in the additional functionality unit 32 to the digital sensor 100, and connects a 4-20 mA input device that controls opening and closing of a valve to the connection unit 20c of the functionality expansion apparatus 10. In this case, the digital sensor 100 corresponds to a pH meter. The functionality expansion apparatus 10 converts a value that is measured by the digital sensor 100 to an analog signal. The functionality expansion apparatus 10 transmits the converted signal to the 4-20 mA input device. The 4-20 mA input device controls opening and closing of a valve based on a received pH value.

### Effect

In the seventh embodiment, the user is able to convert a digital signal to an analog signal and enables a connection to the 4-20 mA input device by only connecting the functionality expansion apparatus 10 to the digital sensor 100. Further, with the functionality expansion apparatus 10, the digital sensor 100 is able to include various kinds of input output terminals and a power terminal for receiving an auxiliary electrical signal. With this configuration, the user is able to cooperate with a peripheral device without introduction of a converter and re-configuration of wiring, so that it is possible to improve usability.

### Numerical values etc.

The functions or the like described in the embodiments as described above are mere examples, and may be arbitrarily changed. Further, the flow of the processes described above may be changed appropriately as long as no contradiction is derived.

The functionality expansion apparatus 10 as described above may be implemented by a digital circuit except for the additional functionality unit 32; therefore, the functionality expansion apparatus 10 can be easily diverted to the digital sensor 100 for a different measurement target and it is possible to improve reusability. Specifically, for example, by rewriting of firmware or an FPGA that implements the functionality expansion apparatus 10.

### System

The processing procedures, control procedures, specific names, and information including various kinds of data and parameters illustrated in the above-described document and drawings may be arbitrarily changed unless otherwise specified.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings. That is, all or part of the apparatuses may be functionally or physically distributed or integrated in arbitrary units depending on various loads or use conditions.

Moreover, all or an arbitrary part of various kinds of processing functions that are implemented by the apparatuses may be realized by a CPU or a program that is analyzed and executed by the CPU, or may be realized by hardware using wired logic.

## Claims

1. A functionality expansion apparatus (10) comprising:
a first connection end portion (20a) that is connected to a digital sensor (100);
a second connection end portion (20b) that is connected to a higher-level device (300) that performs communication with the digital sensor;
a pass-through unit (31) that transfers a signal between the first connection end portion (20a) and the second connection end portion (20b); and
an additional functionality unit (32) that provides an additional functionality for performing a predetermined process to one of the digital sensor (100), the higher-level device (300), and the signal.

2. The functionality expansion apparatus according to claim 1, wherein one of the first connection end portion (20a) and the second connection end portion (20b) includes a connecting terminal that is configured to be physically attached to one of the digital sensor (100) and the higher-level device (300).

3. The functionality expansion apparatus according to claim 1 or 2, wherein one of the first connection end portion (20a) and the second connection end portion (20b) includes a connecting terminal that is physically attachable, a connecting terminal that is connected by a wire, and a connecting terminal that is connected by radio, and is connected to one of the digital sensor (100) and the higher-level device (300) by using any one of the connecting terminals.

4. The functionality expansion apparatus according to any one of claim 1 to 3, wherein the second connection end portion (20b) includes a connecting terminal that is connectable to the first connection end portion (20a) of a different functionality expansion apparatus that includes the first connection end portion (20a), the second connection end portion (20b), the pass-through unit (31), and the additional functionality unit (32) that are the same as the functionality expansion apparatus (10).

5. The functionality expansion apparatus according to any one of claim 1 to 4, further comprising:
a bus arbitration unit (33) that outputs, from the first connection end portion (20a) to the digital sensor (100), a first signal and a second signal in a certain order that is based on a predetermined priority order, the first signal being output from the higher-level device (300) to the digital sensor (100) and received by the second connection end portion (20b), the second signal being output from the additional functionality unit (32) to the digital sensor (100).

6. The functionality expansion apparatus according to any one of claim 1 to 5, further comprising:
a third connection end portion (20c) that is connected to a different device from the digital sensor (100) and the higher-level device (300).

7. The functionality expansion apparatus according to claim 6, further comprising:
a pass-through branching unit (31b) that transfers a signal between the first connection end portion (20a) and the third connection end portion (20c).

8. The functionality expansion apparatus according to claim 6 or 7, wherein
the third connection end portion (20c) is connected to an input device with output of 4-20 mA, and
the additional functionality unit (32) converts a value that is transferred from the first connection end portion (20a) to an analog signal, and transfers the analog signal to the input device via the third connection end portion (20c).

9. The functionality expansion apparatus according to any one of claim 1 to 8, wherein the additional functionality unit (32) performs a numerical value fixation process of fixing a value of the signal to a value that is obtained immediately before the operation performed by the user, with respect to the pass-through unit (31).

10. The functionality expansion apparatus according to any one of claim 1 to 8, wherein the additional functionality unit (32) performs a signal transfer process of transferring, to near field communication, the signal that is being transferred by the pass-through unit (31).

11. The functionality expansion apparatus according to any one of claim 1 to 8, wherein the additional functionality unit (32) performs a display process of displaying a value of the signal that is being transferred by the pass-through unit (31).

12. The functionality expansion apparatus according to any one of claim 1 to 8, wherein the additional functionality unit (32) performs a power supply process of supplying power to the digital sensor (100).
